# EUROPÄISCHE PATENTANMELDUNG

(11) **EP 4 349 773 A1**
(43) Veröffentlichungstag der Anmeldung: **10.04.2024**
(21) Anmeldenummer: 22020481.2
(22) Anmeldetag: 05.10.2022
(51) Int. Cl.: C01B 3/38, B01D 53/047, C01B 3/48, C01B 3/50, H01M 8/10, F25J 3/02, B01D 53/14, B01D 53/62

(54) **VERFAHREN UND ANLAGE ZUR HERSTELLUNG EINES WASSERSTOFFPRODUKTS**

(71) Anmelder: Linde GmbH, 82049 Pullach (DE); Technische Universität München, 80333 München (DE)
(72) Erfinder: Klein, Harald, 82049 Pullach (DE); Peschel, Andreas, 82049 Pullach (DE); Fahr, Steffen, 82049 Pullach (DE); Hemauer, Johanna, 82049 Pullach (DE)
(74) Vertreter: Fischer, Werner

(57) **Zusammenfassung**

Es wird ein Verfahren (100, 200) zur Herstellung eines Wasserstoffprodukts (320), das im Wesentlichen Wasserstoff enthält, vorgeschlagen, wobei das Verfahren umfasst, dass unter Verwendung einer Reformierung (31) und einer Wassergasshift (35) ein erstes Komponentengemisch (312) das Kohlendioxid und tiefer als Kohlendioxid siedende Komponenten, darunter Wasserstoff und Kohlenmonoxid, enthält, bereitgestellt wird, unter Verwendung einer ersten adsorptiven Trennung (36) das Wasserstoffprodukt und ein zweites Komponentengemisch (305, 608), das jede der tiefer als Kohlendioxid siedenden Komponenten jeweils in einem Anteil enthält, bereitgestellt werden, unter Verwendung einer Kohlendioxidabtrennung (50, 60), welche eine kryogene Trennung (54) und eine zweite adsorptive Trennung (55, 65) umfasst, ein Kohlendioxidprodukt (504), das im Wesentlichen Kohlendioxid enthält, und ein drittes Komponentengemisch (507, 607), das im Wesentlichen frei von Kohlendioxid ist und jede der tiefer als Kohlendioxid siedenden Komponenten jeweils in einem Anteil enthält, bereitgestellt werden, und das Verfahren (100) in einer ersten Alternative durchgeführt wird, in welcher das erste Komponentengemisch (312) oder ein Teil hiervon ohne vorherige Trennung in der Kohlendioxidabtrennung (50) der ersten adsorptiven Trennung (36) zugeführt wird, wobei das zweite Komponentengemisch (305) Kohlendioxid enthält, wobei das zweite Komponentengemisch (305) oder ein Teil hiervon der Kohlendioxidabtrennung (50) zugeführt wird, und wobei das dritte Komponentengemisch (507) oder ein Teil hiervon einer Festoxid-Brennstoffzelleneinheit (10) zugeführt wird, oder das Verfahren (200) in einer zweiten Alternative durchgeführt wird, in welcher das erste Komponentengemisch (312) oder ein Teil hiervon ohne vorherige Trennung in der ersten adsorptiven Trennung (36) der Kohlendioxidabtrennung (60) zugeführt wird, wobei das zweite Komponentengemisch (608) im Wesentlichen frei von Kohlendioxid ist, wobei das dritte Komponentengemisch (607) oder ein Teil hiervon der ersten adsorptiven Trennung (36) zugeführt wird, und wobei das zweite Komponentengemisch (608) oder ein Teil hiervon der Festoxid-Brennstoffzelleneinheit (10) zugeführt wird. Eine entsprechende Anlage ist ebenfalls Gegenstand der vorliegenden Erfindung.

## Beschreibung

Die Erfindung betrifft ein Verfahren und eine Anlage zur Herstellung eines Wasserstoffprodukts, das im Wesentlichen Wasserstoff enthält.

### Hintergrund

Die Erzeugung von Wasserstoff im großtechnischen Maßstab erfolgt derzeit noch überwiegend auf Basis von Kohlenwasserstoffen. Hierbei ist eine Reihe von Verfahren bekannt und in gängigen Nachschlagewerken, beispielsweise im Artikel "Hydrogen" in Ullmann's Encyclopedia of Industrial Chemistry, 15. Juni 2000, DOI: 10.1002/14356007.a13_297, Abschnitt 4, "Production", beschrieben.

Die Herstellung von Wasserstoff kann durch Umsetzung von gasförmigen, festen oder flüssigen Kohlenstoffquellen wie Erdgas, Naphtha oder Kohle erfolgen. Hierbei kann insbesondere eine katalytische Reformierung in Ausgestaltungen wie beispielsweise Dampfreformierung (engl. Steam Methane Reforming, SMR) oder autotherme Reformierung (engl. Autothermal Reforming, ATR) zum Einsatz kommen. Ein weiterer Weg zur Herstellung von Wasserstoff aus entsprechenden Kohlenstoffquellen umfasst die katalytische partielle Oxidation (POX, Partial Oxidation). Auch Kombinationen entsprechender Verfahren können eingesetzt verwendet werden. Da derartige Verfahren einen beträchtlichen Kohlendioxid-Fußabdruck aufweisen, wird der durch sie bereitgestellte Wasserstoff auch als "grauer" Wasserstoff bezeichnet.

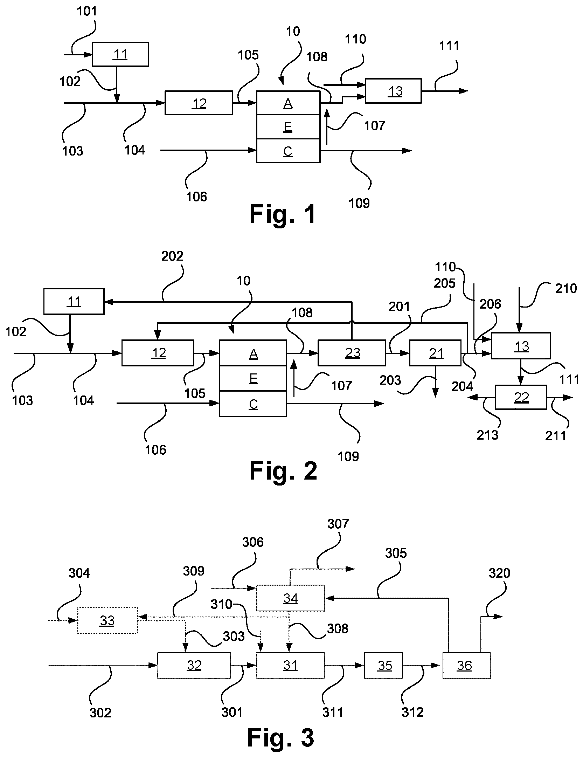

Ausgestaltungen von Dampfreformierungsverfahren zur Herstellung von Wasserstoff sind beispielsweise in der europäischen Patentanmeldung 22020126.3 der Anmelderin beschrieben. Es wird dabei insbesondere auf die dortigen Figuren 1 bis 3 und die zugehörige Figurenbeschreibung in dieser Anmeldung Bezug genommen.

Im Zuge der Klimadiskussion und entsprechender regulatorischer Maßnahmen bekommt die Vermeidung und Rückgewinnung von Kohlendioxid zunehmend an Bedeutung. Eine langfristig angestrebte Lösung kann beispielsweise die Gewinnung von Wasserstoff mittels Elektrolyse umfassen, die bei Einsatz von erneuerbaren Energiequellen kohlendioxidneutral sein kann, so dass entsprechend hergestellter Wasserstoff auch als "grün" bezeichnet wird.

Zumindest bis zur wirtschaftlich erfolgreichen Realisierung von Verfahren zur Herstellung von "grünem" Wasserstoff können Brückentechnologien eingesetzt werden. Diese umfassen insbesondere die Rückgewinnung und Lagerung oder Verwendung von Kohlendioxid (engl. Carbon (Dioxide) Capture and Storage, CCS bzw. Carbon (Dioxide) Capture and Utilization, CCU). In diesem Fall wird entsprechender Wasserstoff auch als "blau" bezeichnet.

Die vorliegende Erfindung stellt sich die Aufgabe, die Gewinnung von Wasserstoff unter Verwendung von Kohlenstoff enthaltenden Einsatzmaterialien zu verbessern und hierbei insbesondere eine besonders effiziente und/oder vollständige Rückgewinnung von Kohlendioxid zu ermöglichen.

### Offenbarung der Erfindung

Vor diesem Hintergrund werden ein Verfahren und eine Anlage zur Gewinnung eines Wasserstoffprodukts mit den Merkmalen der jeweiligen unabhängigen Patentansprüche angegeben. Ausgestaltungen sind Gegenstand der abhängigen Patentansprüche und der nachfolgenden Beschreibung.

Ein hier vorgeschlagenes Verfahren zur Herstellung eines Wasserstoffprodukts, das im Wesentlichen Wasserstoff enthält, umfasst, dass unter Verwendung einer Reformierung und einer Wassergasshift ein erstes Komponentengemisch das Kohlendioxid und tiefer als Kohlendioxid siedende Komponenten, darunter Wasserstoff und Kohlenmonoxid, enthält, bereitgestellt wird.

Ist hier von "einer" Reformierung oder "einer" Wassergasshift im Singular die Rede, schließt dies nicht aus, dass hierbei jeweils seriell und/oder parallel angeordnete Reaktionsschritte beliebiger und jeweils geeigneter Art verwendet werden können. Im Falle der Wassergasshift kann es sich beispielsweise um eine Hoch- und eine Niedertemperaturshift oder um eine Hochtemperatur- und eine isotherme Shift handeln, wie sie grundsätzlich aus dem Stand der Technik bekannt sind. Ferner ist nicht ausgeschlossen, dass zwischen der Wassergasshift und einem nachfolgenden Schritt wie beispielsweise einem der nachfolgend erläuterten Trennschritte weitere Schritte durchgeführt werden können, beispielsweise und insbesondere eine Abkühlung und Auskondensation von Prozesswasser, das abgetrennt werden kann.

Im Rahmen der vorliegenden Erfindung ist fernere vorgesehen, dass unter Verwendung einer ersten adsorptiven Trennung das Wasserstoffprodukt und ein zweites Komponentengemisch, das jede der tiefer als Kohlendioxid siedenden Komponenten jeweils in einem Anteil enthält, bereitgestellt werden, und dass unter Verwendung einer Kohlendioxidabtrennung, welche eine kryogene Trennung und eine zweite adsorptive Trennung umfasst, ein Kohlendioxidprodukt, das im Wesentlichen Kohlendioxid enthält, und ein drittes Komponentengemisch, das im Wesentlichen frei von Kohlendioxid ist und jede der tiefer als Kohlendioxid siedenden Komponenten jeweils in einem Anteil enthält, bereitgestellt werden.

Das Verfahren kann in einer ersten Alternative durchgeführt werden, in welcher das erste Komponentengemisch oder ein Teil hiervon ohne vorherige Trennung in der Kohlendioxidabtrennung der ersten adsorptiven Trennung zugeführt wird, wobei das zweite Komponentengemisch Kohlendioxid enthält, wobei das zweite Komponentengemisch oder ein Teil hiervon der Kohlendioxidabtrennung zugeführt wird, und wobei das dritte Komponentengemisch oder ein Teil hiervon einer Festoxid-Brennstoffzelleneinheit zugeführt wird.

Eine zweite Alternative des Verfahrens umfasst dagegen, dass das erste Komponentengemisch oder ein Teil hiervon ohne vorherige Trennung in der ersten adsorptiven Trennung der Kohlendioxidabtrennung zugeführt wird, wobei das zweite Komponentengemisch im Wesentlichen frei von Kohlendioxid ist, wobei das dritte Komponentengemisch oder ein Teil hiervon der ersten adsorptiven Trennung zugeführt wird, und wobei das zweite Komponentengemisch oder ein Teil hiervon der Festoxid-Brennstoffzelleneinheit zugeführt wird.

Unter der Angabe "im Wesentlichen" soll hier insbesondere verstanden werden, dass in einer beanspruchten Zusammensetzung, einem Stoffstrom usw. neben den obligatorischen Bestandteilen weitere zugelassen sind, sofern sich die wesentlichen Merkmale der beanspruchten Zusammensetzung durch diese weiteren Bestandteile nicht signifikant ändern. Beispielsweise eignet sich ein "im Wesentlichen an Kohlendioxid freies" Produkt, ein entsprechendes Gemisch oder dergleichen für eine Abblasung an die Atmosphäre, ohne die Kohlendioxidemissionen des Verfahrens nennenswert zu erhöhen. Entsprechend weist ein "im Wesentlichen" Wasserstoff enthaltendes Produkt keine Komponenten außer Wasserstoff auf, die die Verwendung nennenswert beeinflussen. Ein Produkt, Gasgemisch oder dergleichen, das "im Wesentlichen" Wasserstoff enthält, kann insbesondere mehr als 95, 99, 99,9 oder 99,99 % Wasserstoff aufweisen. Umgekehrt ist dieses "im Wesentlichen frei" von Kohlendioxid, wenn es weniger als 5, 1, 0,1 oder 0,01 % Kohlendioxid enthält. Die Prozentangaben können sich auf Mol-, Mengen- oder Volumenanteile beziehen.
Die im Rahmen der vorliegenden Erfindung vorgeschlagene Lösung umfasst eine Kombination aus einer oder mehreren Festoxid-Brennstoffzellen und einer Adsorption, insbesondere einer Druckwechseladsorption, zur Abtrennung von Kohlendioxid. Durch den Einsatz der vorliegenden Erfindung kann ein nahezu emissionsfreier Wasserstoffproduktionsprozess erreicht werden, wobei gleichzeitig eine hohe Prozesseffizienz erhalten wird bzw. bleibt. Weitere Vorteile und Ausgestaltungen werden nachfolgend, und unter Bezugnahme auf die Figuren, noch näher erläutert.

Die Reformierung kann in Ausgestaltungen der Erfindung einen oder mehrere Reformierschritte umfassen, der oder die aus einer Dampfreformierung, einer elektrifizierten Dampfreformierung, einer partiellen Oxidation und einer autothermen Reformierung ausgewählt ist oder sind. Die genannten Verfahren können jeweils nach Zweckmäßigkeit und Verfügbarkeit ausgewählt werden. Erneut sei zu Details auf die eingangs zitierte Fachliteratur verwiesen.

In Ausgestaltungen der Erfindung kann der Reformierung ein Methan enthaltender Reformierungseinsatz zugeführt werden, und der Reformierungseinsatz kann unter Verwendung eines oder mehrere Aufbereitungsschritte gebildet werden, die eine Entschwefelung und/oder eine Präreformierung umfassen. Auf diese Weise kann der Reformierungseinsatz in geeigneter Weise konditioniert werden. Die Bildung des Reformierungseinsatzes kann beispielsweise auch eine Vergasung fester oder flüssiger Einsatzstoffe umfassen.

Das erste Komponentengemisch, das zweite Komponentengemisch und das dritte Komponentengemisch können Methan als eine der tiefer als Kohlendioxid siedenden Komponenten enthalten. Entsprechendes Methan kann insbesondere in der Reformierung nicht umgesetztes Methan darstellen, das im Rahmen der vorliegenden Erfindung insbesondere in einer Festoxid-Brennstoffzelle umgesetzt werden kann.

In Ausgestaltungen der Erfindung kann das Kohlendioxidprodukt unter Verwendung der kryogenen Trennung bereitgestellt werden. Die kryogene Trennung kann insbesondere ein Auskondensieren von flüssigen, kohlendioxidreichen Fraktionen und ggf. eine weitere Trennung in einer Rektifikationskolonne umfassen. Grundsätzlich sind hierbei alle kryogenen Trennschritte einsetzbar, die sich für die Abtrennung von Kohlendioxid eignen. Unter Verwendung der kryogenen Trennung wird dabei in einer entsprechenden Ausgestaltung das Kohlendioxidprodukt und ein viertes Komponentengemisch bereitgestellt, das Kohlendioxid und jede der tiefer als Kohlendioxid siedenden Komponenten jeweils in einem Anteil enthält, wobei das vierte Komponentengemisch oder ein Teil hiervon der zweiten adsorptiven Trennung zugeführt wird, wobei unter Verwendung der zweiten adsorptiven Trennung ein fünftes Komponentengemisch bereitgestellt wird, das Kohlendioxid und jede der tiefer als Kohlendioxid siedenden Komponenten jeweils in einem Anteil enthält, und wobei das fünfte Komponentengemisch oder ein Teil hiervon dem kryogenen Trennschritt zugeführt wird. Die zweite adsorptive Trennung kann wie die erste als Druckwechseladsorption unter Verwendung eines geeigneten Adsorbens ausgebildet sein, das der Fachmann geeignet auswählt.

In der ersten Verfahrensalternative kann das zweite Komponentengemisch oder dessen der Kohlendioxidabtrennung zugeführter Teil, oder (wiederum) ein Teil hiervon, der kryogenen Trennung zugeführt werden, ohne zuvor in der zweiten adsorptiven Trennung getrennt worden zu sein. Hierbei kann auch vorgesehen sein, der Festoxid-Elektrolysezelleneinheit einen Teil des dritten Komponentengemischs zuzuführen, der unter Verwendung einer Membrantrennung gebildet wird.

Die zweite Verfahrensalternative kann dagegen umfassen, dass das erste Komponentengemisch oder dessen der Kohlendioxidabtrennung zugeführter Teil, oder (wiederum) ein Teil hiervon, der zweiten adsorptiven Trennung zugeführt werden, ohne zuvor in der kryogenen Trennung getrennt worden zu sein. Diese Varianten umfassen besonders vorteilhafte Einspeisepositionen in einen entsprechenden Abtrennkreislauf.

Unter Verwendung der Festoxid-Brennstoffzelleneinheit kann in Ausgestaltungen der Erfindung ein Abgas gebildet werden, das Kohlendioxid und eine oder mehrere der tiefer als Kohlendioxid siedenden Komponenten in einem Anteil oder jeweils in einem Anteil enthält, wobei das Abgas in die Kohlendioxidabtrennung zurückgeführt und/oder einer Wärmeerzeugungseinheit verfeuert wird. Insbesondere kann ein entsprechendes Abgas auch Wasser(dampf) enthalten. Durch die genannten Maßnahmen kann ein wesentlicher Anteil des Kohlendioxids dieses kohlendioxidhaltigen Abgases letztlich in das in der kryogenen Trennung gebildete Kohlendioxidprodukt überführt werden, welches seinerseits einer geeigneten Verwendung (Speicherung, Lagerung usw.) zugeführt werden kann.

In Ausgestaltungen der vorliegenden Erfindung kann stromauf der kryogenen Trennung eine Verdichtung und Trocknung vorgenommen werden, um auf diese Weise den Einsatz in die kryogene Trennung geeignet zu konditionieren.

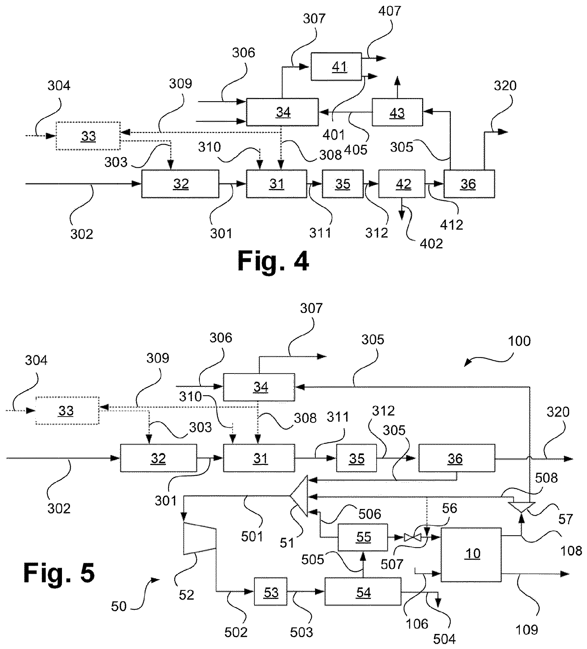

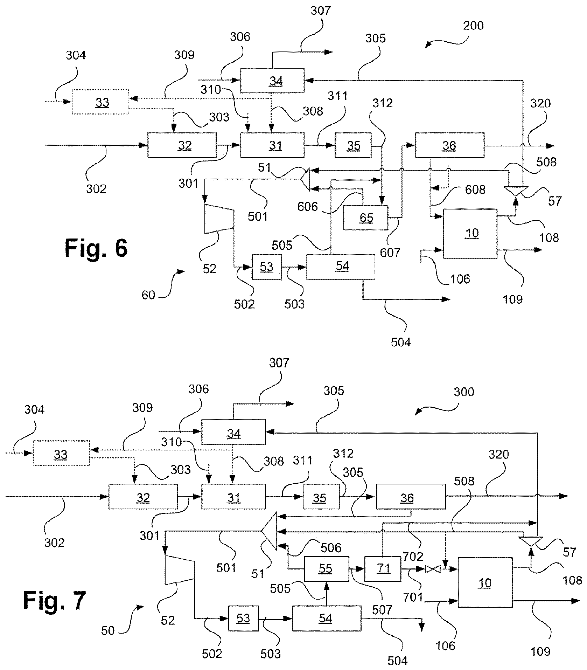

In Ausgestaltungen der vorliegenden Erfindung können das erste Komponentengemisch, das zweite Komponentengemisch und das dritte Komponentengemisch jeweils einige oder alle Komponenten aus einer Gruppe von Komponenten aufweisen, die aus Wasserstoff, Methan, Kohlenmonoxid, Wasser, Stickstoff und Spurenverunreinigungen besteht. Ferner können auch das vierte Komponentengemisch und das fünfte Komponentengemisch einen Teil oder alle dieser Komponenten aufweisen. Für Gehalte entsprechender Komponenten in unterschiedlichen Ausgestaltungen der Erfindung sei auf die Tabellen 1 bis 4 verwiesen, die im Zusammenhang mit den Figuren 5 und 6 diskutiert werden. Die Stromzusammensetzungen können je nach Feedstock, Reformertyp und angestrebter Rückgewinnungsrate für Kohlendioxid stark variieren.

Eine Anlage zur Herstellung eines Wasserstoffprodukts, das im Wesentlichen Wasserstoff enthält, ist ebenfalls Gegenstand der Erfindung. Die Anlage ist dafür eingerichtet, unter Verwendung einer Reformierung und einer Wassergasshift ein erstes Komponentengemisch das Kohlendioxid und tiefer als Kohlendioxid siedende Komponenten, darunter Wasserstoff und Kohlenmonoxid, enthält, bereitzustellen, unter Verwendung einer ersten adsorptiven Trennung das Wasserstoffprodukt und ein zweites Komponentengemisch, das jede der tiefer als Kohlendioxid siedenden Komponenten jeweils in einem Anteil enthält, bereitzustellen, und unter Verwendung einer Kohlendioxidabtrennung, welche eine kryogene Trennung und eine zweite adsorptive Trennung umfasst, ein Kohlendioxidprodukt, das im Wesentlichen Kohlendioxid enthält, und ein drittes Komponentengemisch, das im Wesentlichen frei von Kohlendioxid ist und jede der tiefer als Kohlendioxid siedenden Komponenten jeweils in einem Anteil enthält, bereitzustellen.

Die Anlage ist in einer ersten Ausgestaltung dafür eingerichtet, das erste Komponentengemisch oder einen Teil hiervon ohne vorherige Trennung in der Kohlendioxidabtrennung der ersten adsorptiven Trennung zuzuführen, wobei das zweite Komponentengemisch Kohlendioxid enthält, das zweite Komponentengemisch oder einen Teil hiervon der Kohlendioxidabtrennung zuzuführen, und das dritte Komponentengemisch oder einen Teil hiervon einer Festoxid-Brennstoffzelleneinheit zuzuführen. In einer zweiten Ausgestaltung ist die Anlage dafür eingerichtet, das erste Komponentengemisch oder einen Teil hiervon ohne vorherige Trennung in der ersten adsorptiven Trennung der Kohlendioxidabtrennung zuzuführen, wobei das zweite Komponentengemisch im Wesentlichen frei von Kohlendioxid ist, das dritte Komponentengemisch oder einen Teil hiervon der ersten adsorptiven Trennung zuzuführen, und das zweite Komponentengemisch oder einen Teil hiervon der Festoxid-Brennstoffzelleneinheit zuzuführen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 eine Festoxid-Brennstoffzelle veranschaulicht,
Figur 2 eine Festoxid-Brennstoffzelle mit Kohlendioxidabtrennung veranschaulicht,
Figur 3 eine Reformierung veranschaulicht,
Figur 4 eine Reformierung mit Kohlendioxidabtrennung veranschaulicht,
Figur 5 eine Ausgestaltung der Erfindung veranschaulicht,
Figur 6 eine Ausgestaltung der Erfindung veranschaulicht, und
Figur 7 eine Ausgestaltung der Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Hochtemperatur-Festoxid-Brennstoffzellen (engl. Solid Oxide Fuel Cell, SOFC) sind bekannt. Es handelt sich dabei um Brennstoffzellen, die bei einer Betriebstemperatur von typischerweise 550 bis 900 °C arbeiten. Der Elektrolyt einer Festoxid-Brennstoffzelle besteht aus einem festen keramischen Material, das in der Lage ist, Sauerstoffionen zu leiten, aber für Elektronen isolierend ist. Der Elektrolyt ist als dünne Membran ausgelegt, um die Sauerstoffionen mit geringer Energie transportieren zu können. Für den Transport der Sauerstoffionen sind die genannten hohen Temperaturen erforderlich. An den Seiten des Elektrolyten sind gasdurchlässige elektrische Leiter als Kathode und Anode angebracht. Die äußere, dem Elektrolyten abgewandte Seite der Kathode ist von Luft umgeben, die äußere Anodenseite von Brenngas. Ungenutzte Luft und ungenutztes Brenngas sowie Verbrennungsprodukte werden aus der Festoxid-Brennstoffzelle abgezogen.

Festoxid-Brennstoffzellen sind elektrochemische Apparate, die die Umwandlung von chemischer in elektrische Energie mit hoher Effizienz und ohne bewegliche Teile ermöglichen. Diese Geräte können mit mehreren Brennstoffquellen betrieben werden, darunter Kohlenwasserstoffe, reiner Wasserstoff und Mischungen davon. Festoxid-Brennstoffzellen erlauben keine vollständige Ausnutzung des Brennstoffs in der Elektrolysezelle, da dies zu einer Deaktivierung des anodenseitigen Katalysators führen würde. Bei konventionellen Festoxid-Brennstoffzellen wird der nicht umgewandelte Brennstoff in einem Katalysator oder Nachbrenner verbrannt, wobei Wärme für die Nebenaggregate und den Wärmeexport gebildet werden kann. Das austretende Rauchgas enthält Stickstoff, Sauerstoff, Kohlendioxid und Wasserdampf und wird herkömmlicherweise an die Atmosphäre abgegeben.

In Figur 1 ist eine Festoxid-Brennstoffzelle mit zugehörigen Apparaten bzw. Einrichtungen in Form eines vereinfachten Diagramms veranschaulicht, die gemäß Ausgestaltungen der vorliegenden Erfindung eingesetzt werden kann.

Die Festoxid-Brennstoffzelle selbst, bzw. eine nachfolgend als "Festoxid-Brennstoffzelleneinheit" bezeichnete Anordnung, ist mit 10 angegeben. Ist dabei nachfolgend von "einer" Festoxid-Brennstoffzellen(einheit) die Rede, versteht sich, wie erwähnt, dass es sich bei einer entsprechenden Einrichtung typischerweise um einen entsprechenden Stapel (Stack) von Festoxid-Brennstoffzellen handeln kann. Die Festoxid-Brennstoffzelleneinheit 10, bzw. jede Festoxid-Brennstoffzelle eines entsprechenden Stapels, weist eine Anode A, eine Kathode C und einen Elektrolyten E auf. Nachfolgend ist dabei auch von einer Anodenseite bzw. einer Kathodenseite die Rede, um zum Ausdruck zu bringen, dass die Anoden bzw. Kathoden mehrerer Festoxid-Brennstoffzellen(einheiten) gemeint sind.

Einer Dampferzeugungseinheit 11 wird ein Wasserstrom 101 zugeführt. Ein in der Dampferzeugungseinheit 101 erzeugter Dampfstrom 102 wird mit einem Einsatzstrom 103, der einen Brennstoff wie bspw. Wasserstoff und/oder einen Kohlenwasserstoff enthält, zu einem Sammelstrom 104 vereinigt. Der Sammelstrom 104 kann in einer optionalen Präreformiereinheit 12 vorbehandelt werden. Dies kann insbesondere bei kohlenwasserstoffhaltigen Einsatzströmen 103 vorgesehen sein.

Der entsprechend vorbehandelte Sammelstrom 105 wird der Anodenseite A der Festoxid-Brennstoffzelleneinheit 10 bzw. einem entsprechenden Stapel zugeführt. An der Anodenseite wird ein Luftstrom 106 zugeführt.

Der oder die Brennstoffe des Einsatzstroms 103 werden mit Sauerstoffionen O²⁻, hier mit 107 angedeutet, die durch die Membran der Festoxid-Brennstoffzelleneinheit 10 bzw. die Membranen eines entsprechenden Stapels wandern, in an sich bekannter Weise unter Gewinnung von elektrischem Strom umgesetzt, so dass der Anodenseite A ein an dem/den Brennstoffe(n) ab- und an Kohlendioxid angereichertes Gasgemisch in Form eines Stoffstroms 108 und der Kathodenseite C sauerstoffabgereicherte Luft in Form eines Stoffstroms 109 entnommen werden können.

Wie erwähnt, erfolgt in einer Festoxid-Brennstoffzelleneinheit 10 bzw. einem entsprechenden Stapel aus betriebstechnischen Gründen keine vollständige Umsetzung des oder der Brennstoffe, so dass der Stoffstrom 108 noch einen gewissen Anteil hiervon enthält. Daher ist eine Katalyseeinheit 13 vorgesehen, die den verbleibenden Rest unter Verwendung eines Sauerstoff enthaltenden Stroms 110 umsetzt, so dass ein im Wesentlichen brennstofffreies, jedoch Kohlendioxid enthaltendes Abgas erhalten wird. Dieses wird als Abgasstrom 111 ausgeführt.

Die Notwendigkeit, die Emissionen von Kohlendioxid zu reduzieren, um das Ausmaß der globalen Erwärmung zu verringern, unterstreicht die Notwendigkeit der Abscheidung bzw. Vermeidung von Kohlendioxid in Industrieprozessen. Die langfristige Lösung zur Dekarbonisierung des Chemie- und Energiesektors ist der Ersatz fossiler kohlenstoffhaltiger Energieträger durch erneuerbaren Strom und speicherbare Derivate davon, wie z.B. grünem Wasserstoff.

In diesem Zusammenhang sind Festoxid-Brennstoffzellen gut geeignet, um gespeicherten grünen Wasserstoff in abschaltbaren bzw. flexibel bereitstellbaren grünen Strom umzuwandeln. Bis jedoch Lösungen für grünen Wasserstoff wirtschaftlich tragfähig sind, werden Verfahren benötigt, bei denen das entstehende Kohlendioxid abgetrennt und ggf. gespeichert (engl. Carbon Capture and Storage, CCS) oder genutzt (engl. Carbon Capture and Utilization, CCU) wird.

Die bekannten Verfahren der Kohlendioxidabtrennung nach einer Verbrennung können auf das Abgas angewandt werden, das den Katalysator der Festoxid-Brennstoffzelle verlässt. Dazu gehören die Absorption mit einem Lösungsmittel und die Druckwechseladsorption (engl. Pressure Swing Adsorption, PSA). Darüber hinaus kann das Anodenabgas, das einen hohen Anteil an Kohlendioxid enthält, einer Niedertemperatur- oder membranbasierten Kohlendioxidabtrennung unterzogen werden, wodurch ein wasserstoffhaltiger und kohlenstoffarmer Brennstoffstrom und ein Kohlendioxidstrom erzeugt werden. Optional kann der Kohlendioxidabtrennung ein Wassergas-Shiftreaktor (engl. Water Gas Shift, WGS) vorgeschaltet werden. Schließlich kann dem Nachbrenner der Brennstoffzelle anstelle von Luft gereinigter Sauerstoff zugeführt werden, wodurch ein Stoffstrom gebildet werden kann, der hauptsächlich aus Kohlendioxid und Wasser besteht und aus dem sich leicht ein Kohlendioxidstrom von hoher Reinheit erzeugen lässt.

In Figur 2 ist eine Festoxid-Brennstoffzelleneinheit 10 mit dieser zugeordneten Mitteln zur Kohlendioxidabtrennung veranschaulicht, wobei die bereits in Figur 1 ausführlich erläuterten Komponenten mit identischen Bezugszeichen angegeben sind und nicht erneut erläutert werden.

Wie in Figur 2 veranschaulicht, können hierbei eine Kohlendioxidentfernungseinheit 21 und eine Kohlendioxidentfernungseinheit 22, gemeinsam oder in Form von Alternativen, bereitgestellt sein. In einer Verdichtungseinheit 23 kann dabei der Stoffstrom 108 zunächst unter Abscheidung von Wasser verdichtet werden.

Das Wasser kann in Form eines Wasserstroms 202 anstelle oder zusätzlich zu dem in Figur 1 veranschaulichten Wasserstrom 102 in die Dampferzeugungseinheit 11 eingespeist werden. Ein verdichteter und wasserärmerer Strom 201 kann der in an sich bekannter Art ausgeführten Kohlendioxidentfernungseinheit 21 zugeführt werden, aus der ein Kohlendioxidstrom 203 entnommen werden kann.

Ein Teil eines der Kohlendioxidentfernungseinheit 21 entnommenen Stoffstroms 204 kann als Recyclestrom 205 in die Präreformiereinheit 12 zurückgeführt werden, ein weiterer Teil 206 wird in die Katalyseeinheit 13 eingespeist, die zusätzlich mit einem Sauerstoffstrom 10 betrieben werden kann.

Das Abgas 111 enthält bei entsprechendem Brennstoff des Einsatzstroms 103 Kohlendioxid, das in der Kohlendioxidentfernungseinheit 21 unter Erhalt eines an Kohlendioxid abgereicherten Abgasstroms 211 und eines Kohlendioxidstroms 213 im Wesentlichen abgetrennt werden kann.

Kohlenwasserstoffe können mit Hilfe eines Reformierungsreaktors beliebiger Art (siehe hierzu die obigen Erläuterungen) in Wasserstoff umgewandelt werden. Der zugehörige Prozess umfasst in der Regel eine Vorbehandlung, eine Reformierungseinheit und einen oder mehrere optionale Wassergasshift-Reaktoren, gefolgt von einer Druckwechseladsorptionseinheit. Letztere liefert das gewünschte Produkt und einen Abgasstrom, der exportiert oder verbrannt werden kann, um die Reformierungseinheit zu erwärmen und/oder Dampf zu erzeugen.

In Figur 3 ist eine Reformierung veranschaulicht, die in Ausgestaltungen der Erfindung eingesetzt werden kann. Zu den hierbei einsetzbaren Reformierverfahren sei auf die eingangs vorgenommenen Erläuterungen verwiesen. Je nach Verfahren können dabei die nachfolgenden Komponenten bzw. Medien vorhanden sein oder nicht.

Da nachfolgend (auch) vermehrt auf eine Druckwechseladsorption Bezug genommen wird, sollen zunächst entsprechende Grundlagen und insbesondere für die vorliegende Erfindung relevante Aspekte hiervon beschrieben werden.

Die Druckwechseladsorption basiert auf physikalischen Adsorptionsphänomenen, wobei leicht flüchtige Verbindungen mit geringer Polarität wie Wasserstoff oder Helium im Vergleich zu Molekülen wie Kohlendioxid, Kohlenmonoxid, Stickstoff und Kohlenwasserstoffen praktisch nicht adsorbierbar sind. Die zuletzt genannten Komponenten können aufgrund ihrer unterschiedlichen Adsorptionskräfte getrennt werden. Druckwechseladsorptionsverfahren arbeiten zwischen zwei Druckstufen. Die Adsorption erfolgt bei einem vergleichsweise hohen Adsorptionsdruck, während derer ein von den adsorbierten Komponenten befreites Gas oder Gasgemisch aus der Druckwechseladsorption ausgeführt wird. Dieses wird auch als "Hochdruckstrom" bezeichnet. Die Desorption erfolgt dagegen bei einem vergleichsweise niedrigen Desorptionsdruck, wobei ein hier als "Niederdruckstrom" bezeichnetes Gas oder Gasgemisch bereitgestellt werden kann. Eine Druckwechseladsorption, in der die Desorption auf einem unteratmosphärischen Druckniveau erfolgt, wird typischerweise auch als "Vakuum"-PSA (VPSA) bezeichnet.

Bei der Druckwechseladsorption werden typischerweise mehrere, parallel geschaltete Druckbehälter eingesetzt, die mit einem Adsorbens befüllt sind. Mittels Verbindungsleitungen und Regelventilen kann jeweils ist mindestens einer der Druckbehälter auf dem Adsorptionsdruck mit einem Feedgas, auch "Trenneinsatz" genannt, durchströmt und auf diese Weise ein Hochdruckstrom gebildet werden. Ein oder mehrere weitere Druckbehälter werden während dieser Zeit unter Erhalt des Niederdruckstroms regeneriert. Die Druckwechseladsorption stellt sich daher nach außen als kontinuierlicher Prozess dar, während es sich intern um einen diskontinuierlichen Prozess handelt, der aus einer Reihe von parallel ablaufenden Sequenzen besteht.

In der in Figur 3 veranschaulichten Anlage wird einer Reformierungseinheit 31 ein Gasgemisch 301 zugeführt, das im hier veranschaulichten Beispiel einer Vorbehandlungseinheit 32 entnommen wird. Der Vorbehandlungseinheit 32 werden ein Kohlenwasserstoffe enthaltender Einsatzstrom 302 zugeführt, sowie, z.B. im Falle einer Dampfreformierung, ein Dampfstrom 303 aus einer Dampferzeugungseinheit 33, die mit einem Wasserstrom 304 beschickt wird.

In dem hier veranschaulichten Beispiel ist eine Wärmeerzeugungseinheit 34 vorgesehen, die insbesondere in einen Reformierreaktor bzw. die Reformierungseinheit 31 integrierte Brenner aufweisen kann und abweichend zu der in Figur 3 veranschaulichten Beispiel typischerweise nicht extern bereitgestellt ist.

Die Wärmeerzeugungseinheit 34 wird mit einem geeigneten Brennstoffstrom 30 sowie einem sauerstoffhaltigen Strom 306, beispielsweise Verbrennungsluft, beschickt. Aus der Wärmeerzeugungseinheit 34 kann ein Abgasstrom 307 ausgeführt werden. Wärme kann, wie mit gestrichelten Pfeilen 308, 309 veranschaulicht, der Reformierungseinheit 31 und ggf. der Dampferzeugungseinheit 33 zugeführt werden. Wärme aus dem Abgasstrom 307 kann alternativ oder zusätzlich zur Beheizung weiterer abgebildeter und nicht abgebildeter Ströme genutzt werden.

Der Reformierungseinheit 31, der ein weiterer Sauerstoffstrom 310 zugeführt werden kann, wird ein Produktgemisch 311 entnommen und einer Wassergasshifteinheit 35 zugeführt, in der der Wasserstoffgehalt in dem Produktgemisch 311 in bekannter Weise durch Umsetzen von Kohlenmonoxid zu Wasserstoff und Kohlendioxid erhöht werden kann. Ein entsprechend erhaltener Folgestrom 312 kann in einer Wasserstoffabtrenneinheit 36, die eine Druckwechseladsorptionseinrichtung und dergleichen aufweisen kann, getrennt werden.

Der Wasserstoffabtrenneinheit 36 kann ein (im Wesentlichen) reiner Wasserstoffstrom 320 entnommen werden. Es verbleibt ein Wasserstoff und andere Gaskomponenten enthaltendes Restgas, das in Form des Brenngasstroms 305 in die Wärmeerzeugungseinheit 34 zurückgeführt werden kann.

Es wurden verschiedene Strategien vorgeschlagen, um die Kohlendioxidemissionen des beschriebenen Wasserstoffherstellungsprozesses zu reduzieren. Dazu gehören die Abscheidung von Kohlendioxid aus dem Prozessgas vor der Druckwechseladsorption, die Abscheidung von Kohlendioxid aus dem Abgas bzw. Restgas der Druckwechseladsorption, und die Abscheidung von Kohlendioxid aus dem Rauchgas, das bei der Verbrennung des Restgases der Druckwechseladsorption und/oder des zusätzlichen Brennstoffs entsteht, der für die Beheizung der Reformiereinheit und die Dampferzeugung benötigt wird.

Zu den typischen Abscheidungsmethoden gehören Absorptions- und Adsorptionsverfahren sowie membranbasierte Trennung und Niedertemperatur-Gas-Flüssigkeits-Trennung. Bei der Verwendung von gereinigtem Sauerstoff als Oxidationsmittel bei der Verbrennung des erwähnten Abgases und/oder Zusatzbrennstoffs kann außerdem ein kohlendioxidreicher Strom durch Kondensation des Wassers im Rauchgas gewonnen werden. Eine Übersicht über die Ströme, die für die Kohlendioxidabscheidung in Frage kommen, findet sich nachfolgend.

In Figur 4 ist hierzu eine Reformierung mit Kohlendioxidabtrennung veranschaulicht, die bis auf die Verwendung von drei (alternativ oder in beliebiger Kombination, oder jeweils alleine bereitgestellter) Kohlendioxidabtrenneinheiten 41, 42, 43, in denen jeweils Kohlendioxidströme 401, 402, 403 abgetrennt werden, im Wesentlichen der Reformierung entsprechen kann, die in Figur 3 dargestellt ist.

Die jeweils an Kohlendioxid abgereicherten Ströme sind mit gegenüber Figur 3 um 100 inkrementierten Bezugszeichen angegeben. Diese werden anstelle der ursprünglichen Stoffströme 307, 412 bzw. 405 bereitgestellt bzw. verwendet.

Die Abscheidung von Kohlendioxid aus dem Prozessgas oder dem Abgas der einer Druckwechseladsorption führt zu Rest-Kohlendioxidemissionen aus der Verbrennung des kohlenstoffhaltigen Restgases und/oder des zusätzlichen Brennstoffs zur Beheizung der Reformierungseinheit und/oder zur Vorheizung von Prozessgas und zur Dampferzeugung. Die Abtrennung von Kohlendioxid aus dem Rauchgas ermöglicht es, die Kohlendioxidemissionen auf nahezu Null zu reduzieren, ist jedoch mit einem hohen Energieaufwand verbunden, da das Kohlendioxid im Rauchgas in einer stärker verdünnten Form vorliegt als im Prozess- und Restgas der Druckwechseladsorption. Schließlich erfordert die Verbrennung mit erhöhtem Sauerstoffgehalt eine Luftzerlegungsanlage (engl. Air Separation Unit, ASU) vor Ort und ist mit einem Energieverlust durch die Abtrennung von Sauerstoff aus der Luft verbunden.

Es wurde vorgeschlagen, Festoxid-Brennstoffzellen und Dampfreformierungseinheiten zu kombinieren, um das in der Druckwechseladsorption erzeugte Restgas effizienter zu nutzen. In einer solchen Anordnung liefert zumindest ein Teil des von der Druckwechseladsorption erzeugten Restgases zumindest einen Teil des Anodenfeeds der Festoxid-Brennstoffzelle. Darüber hinaus können die oben genannten Kohlendioxid-Abscheidungsverfahren zur Reduzierung der Emissionen der Festoxid-Brennstoffzellen und der Dampfreformierungseinheiten wie beschrieben angewendet werden, wenn die Festoxid-Brennstoffzellen und die Dampfreformierungseinheiten entsprechend kombiniert werden.

In einem typischen Prozess zur Umwandlung von Kohlenwasserstoffen in Wasserstoff ist der Produktstrom des (letzten) Wassergasshiftreaktors der Strom mit dem höchsten Kohlendioxid-Partialdruck und das Restgas, das die Druckwechseladsorption zur Wasserstoffabtrennung verlässt, weist den höchsten Anteil an Kohlendioxid auf. Daher ist es thermodynamisch vorteilhaft, Kohlendioxid aus einem dieser Ströme abzuscheiden. Sie enthalten jedoch zumindest etwas Kohlenmonoxid und Methan, das der Reformiereinheit bzw. in den Wassergasshiftreaktoren nicht umgewandelt wurde und in der Regel in einer Brennkammer oder einem katalytischen Oxidator oxidiert wird, um Wärme und Kohlendioxid zu erzeugen. Daher führt die Abscheidung von lediglich Kohlendioxid in diesen Strömen keine nahezu vollständige Vermeidung der Kohlendioxidemissionen erzielt werden.

Um mit dem Stand der Technik Kohlendioxidemissionen nahe Null zu erreichen, muss das Kohlendioxid daher in mindestens einem anderen Strom als dem Prozessgas und dem Restgas der Druckwechseladsorption abgetrennt werden.

Vorliegend wird die Verwendung einer oder mehrerer Festoxid-Brennstoffzellen in Verbindung mit einer kohlendioxidselektiven Druckwechseladsorption vorgeschlagen, wodurch ein "blauer" Wasserstoffproduktionsprozess mit hoher Prozesseffizienz geschaffen wird. Die kohlendioxidselektive Druckwechseladsorption wird nachfolgend auch als "zweite adsorptive Trennung", "zweite Druckwechseladsorption" usw. bezeichnet, wohingegen die zur Gewinnung von Wasserstoff eingesetzte Druckwechseladsorption als "erste adsorptive Trennung", "zweite Druckwechseladsorption" usw. bezeichnet wird.

Dabei wird in alternativen Ausgestaltungen vorgeschlagen Kohlendioxid aus dem Restgas der ersten Druckwechseladorption oder dem Produktstrom des (bzw. des letzten) Wassergasshiftreaktors abzuscheiden. Ferner wird vorgeschlagen, mindestens einen Strom, der sowohl die erste Druckwechseladsorption als auch die zweite Druckwechseladsorption durchlaufen hat und daher mit Methan und/oder Kohlenmonoxid angereichert ist, auf die Anodenseite einer oder mehrerer Festoxid-Brennstoffzellen zu leiten, um Strom und/oder Wärme und ein kohlendioxidreiches Anodenabgas zu erzeugen. Zumindest ein Teil dieses Anodenabgases kann in die stromab der zweiten Druckwechseladsorption durchgeführte kryogene Trennung zurückgeführt werden, um zumindest einen Teil des in diesem Strom enthaltenen Kohlendioxid in einem Kohlendioxidprodukt rückzugewinnen.

Mit der vorgeschlagenen Kombination aus einer oder mehreren Festoxid-Brennstoffzellen und einer Druckwechseladsorption zur Abtrennung von Kohlendioxid wird ein nahezu emissionsfreier Wasserstoffherstellungsprozess bereitgestellt und gleichzeitig eine hohe Prozesseffizienz beibehalten.

Der vorgeschlagene Prozess kann eine Vorverarbeitung, z.B. eine Entfernung aller Schwefelkomponenten aus dem Kohlenwasserstoffeinsatz und/oder die Vorformung des Einsatzes umfassen. In einer Einheit zur Umwandlung von Kohlenwasserstoffen in Synthesegas der erläuterten mit einer nachgeschalteten Wassergasshift ein wasserstoffreiches Synthesegas erhalten. Eine erste Druckwechseladsorption wird verwendet, um einen Wasserstoffstrom von hoher Reinheit und einen zweiten Strom zu erzeugen, der im Folgenden Restgas bezeichnet wird.

In einer Ausgestaltung wird das Restgas der ersten Druckwechseladsorption komprimiert und in einen Trockner geleitet, gefolgt von einer kryogenen Kohlendioxidentfernung. Letztere umfasst die Schritte der Kondensation mindestens eines Teils des Kohlendioxid im Strom und optional die Reinigung des Kondensats durch Destillation oder Abkochen von Verunreinigungen. Die kryogene Trenneinheit erzeugt einen hochreinen Kohlendioxidstrom und einen zweiten Strom. Der zweite Strom wird in die zweite Druckwechseladsorption geleitet, wo ein an Kohlendioxid angereicherter und ein an Kohlendioxid abgereicherter Strom erzeugt werden.

Der an Kohlendioxid angereicherte Strom wird mit dem Restgas der ersten Druckwechseladsorption kombiniert und schließlich in die Kohlendioxidreinigung zurückgeführt. Mindestens ein Teil des kohlendioxidarmen oder -freien Stroms wird zur Anodenseite einer oder mehrerer Festoxid-Brennstoffzellen geleitet, wo mindestens ein Teil des im Strom vorhandenen Kohlenmonoxids, Kohlendioxids und Wasserstoffs oxidiert und Strom erzeugt wird. Ein kohlendioxidreiches Abgas der Festoxid-Brennstoffzelle wird mit dem Restgas der ersten Druckwechseladsorption und dem an Kohlendioxid angereicherten Strom aus der zweiten Druckwechseladsorption kombiniert und schließlich in die Kohlendioxidabtrennung zurückgeführt. Mindestens ein zweiter Teil des Anodenabgases der Festoxid-Brennstoffzelle wird gereinigt und in einer Brennkammer, einem befeuerten Heizer oder einer katalytischen Oxidationseinheit oxidiert. Die Verbrennungswärme kann zur Erzeugung von Dampf und/oder zur Bereitstellung von Wärme für die Reformierung und/oder zur Erwärmung eines beliebigen Stroms im Prozess verwendet werden.

In Figur 5 ist ein Verfahren gemäß einer entsprechenden Ausgestaltung der Erfindung veranschaulicht und insgesamt mit 100 bezeichnet. Zu den grundlegenden Komponenten bzw. Verfahrensschritten sei insbesondere auf Figur 3 und die zugehörigen Erläuterungen verwiesen, die auch hier in entsprechender Weise gelten.

Wie in Figur 5 veranschaulicht, ist hier eine Hochtemperatur-Brennstoffzelle 10 bzw. ein entsprechender Stack bereitgestellt. Zu den Stoffströmen 106, 108 und 109 wird dabei auf die Figuren 1 und 2 verwiesen.

Der Stoffstrom bzw. Restgasstrom 305 wird hierbei in einem Sammler 51 mit weiteren, unten erläuterten Stoffströmen zu einem Sammelstrom 501 vereinigt, der in einer Verdichtereinheit 52 verdichtet wird. Ein entsprechend verdichteter Sammelstrom 502 wird in einer Trenneinheit 53, insbesondere umfassend eine Temperaturwechseladsorptionseinrichtung, getrocknet und danach als getrockneter Stoffstrom 503 einer Kohlendioxidaufreinigungseinheit 54 zugeführt. In der Kohlendioxidaufreinigungseinheit 54 kann Kohlendioxid in im Wesentlichen reiner Form abgetrennt und in einem Kohlendioxidstrom 504 überführt werden.

Ein nach der Abtrennung von Kohlendioxid in der Kohlendioxidaufreinigungseinheit 54 verbleibender Stoffstrom 505 kann in eine weitere Trenneinheit 55 eingespeist werden, die insbesondere eine Druckwechseladsorptionseinrichtung aufweist. In der weiteren Trenneinheit 55 werden ein an Kohlendioxid angereicherter und anderen Komponenten abgereicherter Stoffstrom 506 gebildet, der dem Sammler 51 wieder zugeführt werden kann, sowie ein an Kohlendioxid abgereicherter und anderen Komponenten abgereicherter Stoffstrom 507, der im dargestellten Beispiel über ein Ventil 56 entspannt und, wie in Figur 1 und 2 der Stoffstrom 104 bzw. 105, der Brennstoffzelle 10 bzw. einem entsprechenden Stack zugeführt werden kann.

Das mittels der Brennstoffzelle 10 bzw. in einem entsprechenden Stack gebildete Abgas 108 kann über einen Verteiler 57 zu einem Teil in die Wärmegewinnungseinheit 34 zurückgeführt und zu einem anderen Teil in Form eines Stoffstroms 507 in den Kreislauf zum Verdichter 52 usw. zurückgespeist werden. Wie in Form eines gestrichelten Pfeils veranschaulicht, ist auch eine direkte Rückführung in die Brennstoffzelle 10 möglich.

Alternativ zu der in Figur 5 gezeigten Konfiguration der Betriebseinheiten kann die Reihenfolge, in der das Prozessgas in die erste und zweite Druckwechseladsorption eintritt, umgekehrt werden, indem der Produktstrom der Wassergasshift zunächst in die zweite Druckwechseladsorption geleitet wird, um einen an Kohlendioxid angereicherten Strom und einen an Kohlendioxid abgereicherten Strom zu erzeugen, wobei der an Kohlendioxid abgereicherte Strom weiter in die erste Druckwechseladsorption geleitet wird. In dieser Konfiguration wird zumindest ein Teil des Restgases der ersten Druckwechseladsorption zur Anode einer oder mehrerer Festoxid-Brennstoffzellen geleitet, um Elektrizität und ein an Kohlendioxid angereichertes Anodenabgas der Festoxid-Brennstoffzelle zu erzeugen.

Mindestens ein Teil des Anodenabgases kann mit dem an Kohlendioxid angereicherten Strom aus der zweiten Druckwechseladsorption kombiniert und somit weiter in die Kohlendioxidabtrennung geleitet werden. Wie in der zuvor erläuterten Konfiguration basiert die Trennung auf der Verwendung von zwei Druckwechseladsorptionsschritten, um einen an Kohlendioxid angereicherten Strom, einen wasserstoffangereicherten Strom und einen dritten Strom zu erhalten, der einen signifikanten Anteil von Kohlenmonoxid und/oder Methan enthält, wobei der letztere Strom als Feed für eine oder mehrere Festoxid-Brennstoffzellen verwendet wird. Auf diese Weise kann ein zusätzlicher, an Kohlendioxid angereicherter Strom erzeugt wird, von dem ein Teil schließlich zur Kohlendioxidreinigung geleitet wird.

In Figur 6 ist ein Verfahren gemäß einer Ausgestaltung der Erfindung veranschaulicht und insgesamt mit 200 bezeichnet. Zu den grundlegenden Komponenten bzw. Verfahrensschritten sei insbesondere auf Figuren 3 und 5 und die zugehörigen Erläuterungen verwiesen, die auch hier in entsprechender Weise gelten. Nachfolgend werden insbesondere die Abweichungen ggü. Figur 5 bzw. Anlage 100 erläutert.

Der Stoffstrom 312 wird hier in eine Trenneinheit 65 eingespeist, die insbesondere eine Druckwechseladsorptionseinrichtung aufweisen kann. In der weiteren Trenneinheit 55 werden ein an Kohlendioxid angereicherter und anderen Komponenten abgereicherter Stoffstrom 606 gebildet, der dem Sammler 51 zugeführt werden kann, sowie ein an Kohlendioxid abgereicherter und anderen Komponenten abgereicherter Stoffstrom 607, der im dargestellten Beispiel anstelle des Stoffstroms 312 der Wasserstoffabtrenneinheit 36 zugeführt wird.

Ein in der Wasserstoffabtrenneinheit 36 verbleibender Stoffstrom 608 kann, wie in Figur 1 und 2 der Stoffstrom 104 bzw. 105, der Brennstoffzelle 10 bzw. einem entsprechenden Stack zugeführt werden. Ein gestrichelter Pfeil veranschaulicht, wie ein Teilstrom des Stoffstroms 508 zurückgeführt werden kann.

In beiden Ausführungsformen, d.h. den Verfahren 100 und 200 gemäß den Figuren 5 und 6 kann die Erfindung es ermöglichen, mindestens 90%, vorzugsweise mindestens 95% und besonders bevorzugt mindestens 98% des im Prozess erzeugten Kohlendioxids abzutrennen. Die Vorteile der Verwendung von Festoxid-Brennstoffzellen für die industrielle Abgasnutzung sind dabei insbesondere die hocheffiziente Produktion von Elektrizität und die Erzeugung eines an Kohlendioxid angereicherten Stroms, insbesondere eines Stroms, der nicht mit Stickstoff aus der Luft verdünnt ist. Die Vorteile der vorgeschlagenen Konfigurationen sind die Ermöglichung von Kohlendioxidemissionen nahe Null aus einem Prozess zur Umwandlung von Kohlenwasserstoffen in Wasserstoff und die hocheffiziente Kohlendioxidabscheidung in einem Strom, bei dem die Trennung thermodynamisch besonders vorteilhaft ist.

In der nachstehenden Tabelle 1 sind typische Wertebereiche für Gehalte der Komponenten Wasserstoff, Stickstoff, Kohlenmonoxid, Kohlendioxid, Wasser und Methan in den hier als "erstes" bis "fünftes" Komponentengemisch (Spalte 1, "KG") bezeichneten Komponentengemischen gemäß der in Figur 5 veranschaulichten Ausgestaltung angegeben. Die Prozentangaben beziehen sich auf den molaren Anteil und ergänzen sich jeweils zu 100%. Die entsprechenden Komponentengemische sind hier jeweils mit den entsprechenden Bezugszeichen, mit der sie in Figur 5 referenziert sind (Spalte 2, ("BZ") angegeben.

**Tabelle 1**

| **KG** | **BZ** | **H₂** | **N₂** | **CO** | **CO₂** | **H₂O** | **CH₄** |
|---|---|---|---|---|---|---|---|
| erstes | 312 | >60 % | <1% | 0,1 - 5% | 15-30% | <5% | 0,1-5% |
| zweites | 305 | <40% | <1% | 0,5-10% | 30 - 70 % | <5% | 0,5-10% |
| drittes | 507 | 50 - 90 % | <20% | 4-20% | < 5 %* | 0,00% | 1 - 10% |
| viertes | 505 | 30 - 80% | <20% | 4-20% | 10-50% | 0,00% | 0,5 - 10% |
| fünftes | 506 | 1 - 30% | < 10 % | 0,5 - 10% | 60 - 95 % | 0,00% | 0,5 - 10% |

| | | | | | | | |
|---|---|---|---|---|---|---|---|
| * insbesondere < 1% | | | | | | | |

Die nachstehende Tabelle 2 entspricht Tabelle 1, und damit dem Ausführungsbeispiel gemäß Figur 5, wobei jedoch Beispielwerte angegeben sind, die insbesondere um 5 bis 10% nach oben und unten abweichen können. Diese beispielhaften Zusammensetzungen gelten für ca. 99% angestrebter Kohlendioxidwiedergewinnung und einen elektrisch beheizten Reformierreaktor.

**Tabelle 2**

| **KG** | **BZ** | **H₂** | **N₂** | **CO** | **CO₂** | **H₂O** | **CH₄** |
|---|---|---|---|---|---|---|---|
| erstes | 312 | 79,25% | 0,17% | 0,86% | 19,08% | 0,31% | 0,32% |
| zweites | 305 | 31,55% | 0,36% | 2,85% | 63,30% | 0,88% | 1,06% |
| drittes | 507 | 82,42% | 7,88% | 6,91% | 0,46% | 0,00% | 2,34% |
| viertes | 505 | 55,56% | 6,08% | 6,29% | 29,10% | 0,00% | 2,98% |
| fünftes | 506 | 8,42% | 2,93% | 5,19% | 79,36% | 0,00% | 4,10% |

In der nachstehenden Tabelle 3 sind, entsprechend Tabelle 1, wieder typische Wertebereiche für Gehalte der Komponenten Wasserstoff, Stickstoff, Kohlenmonoxid, Kohlendioxid, Wasser und Methan in den Komponentengemischen angegeben, hier jedoch gemäß der in Figur 6 veranschaulichten Ausgestaltung.

**Tabelle 4**

| **KG** | **BZ** | **H₂** | **N₂** | **CO** | **CO₂** | **H₂O** | **CH₄** |
|---|---|---|---|---|---|---|---|
| erstes | 312 | >60% | <1% | 0,1 - 5% | 15-30% | <5% | 0,1 - 5% |
| zweites | 305 | 50 - 90 % | <20 % | 4 - 20 % | < 10 % | 0,00% | 1 - 10% |
| drittes | 607 | >90 % | <5% | 0,5 - 5 % | <5% | 0,00% | 0,1 - 5 % |
| viertes | 505 | 30 - 80% | <20% | 0,5 - 10% | 10-50% | 0,00% | 0,5 - 10% |
| fünftes | 606 | 1 - 30% | <5% | 0,5-5% | 60 - 95 % | <5% | 0,1 - 5 % |

| | | | | | | | |
|---|---|---|---|---|---|---|---|
| * insbesondere < 1% | | | | | | | |

Die nachstehende Tabelle 4 entspricht Tabelle 3, und damit dem Ausführungsbeispiel gemäß Figur 6, wobei jedoch Beispielwerte angegeben sind, die insbesondere um 5 bis 10% nach oben und unten abweichen können. Auch hier gelten die beispielhaften Zusammensetzungen für ca. 99% angestrebter Kohlendioxidwiedergewinnung und einen elektrisch beheizten Reformierreaktor

**Tabelle 2**

| **KG** | **BZ** | **H₂** | **N₂** | **CO** | **CO₂** | **H₂O** | **CH₄** |
|---|---|---|---|---|---|---|---|
| erstes | 312 | 79,25% | 0,17% | 0,86% | 19,08% | 0,31% | 0,32% |
| zweites | 305 | 82,64% | 4,70% | 8,05% | 1,89% | 0,00% | 2,72% |
| drittes | 607 | 97,46% | 0,74% | 1,14% | 0,27% | 0,00% | 0,39% |
| viertes | 505 | 57,74% | 5,47% | 4,66% | 29,01% | 0,00% | 3,12% |
| fünftes | 606 | 16,90% | 0,47% | 1,46% | 78,88% | 1,12% | 1,17% |

Optional kann eine wasserstoffselektive Membran eingesetzt werden, um einen wasserstoffangereicherten Strom und einen wasserstoffarmen Strom aus dem kohlendioxidarmen Strom aus der zweiten Druckwechseladsorption zu erzeugen, wobei der wasserstoffangereicherte Strom als kohlenstoffarmer Brennstoff verwendet werden kann und der wasserstoffarme Strom zur Anodenseite der Festoxid-Brennstoffzelle(n) geleitet werden kann. Dies ist in Figur 7 anhand eines Verfahrens 300 veranschaulicht, wo eine entsprechende Membrantrennung mit 71 angegeben ist, das aber ansonsten im Wesentlichen dem Verfahren 100 gemäß Figur 1 entspricht. Die entsprechenden Stoffströme sind mit 701 und 702 bezeichnet. Auf die obigen Erläuterungen wird ausdrücklich verwiesen. Wenn ein befeuerter Reformierreaktor verwendet wird, um zumindest einen Teil des Wasserstoffs zu erzeugen, kann der kohlenstoffarme Brennstoff gemäß Figur 7, d.h. Stoffstrom 702 z.B. zum Beheizen des Reformierreaktors verwendet werden.

Mehrere Festoxid-Brennstoffzelleneinheiten 10 bzw. Stacks können sich ein oder mehrere Geräte für Hilfsaufgaben teilen. Bei der in Abbildung 5 dargestellten Konfiguration kann ein Druckreduzierabschnitt verwendet werden, um den Druck des an Kohlendioxid abgereicherten Stoffstroms aus der zweiten Druckwechseladsorption zu reduzieren, bevor er in die eine oder mehreren Festoxid-Brennstoffzelleneinheiten 10 anodenseitig eingespeist wird, wodurch ein oder mehrere Fluidströme mit einem niedrigeren Druck als dem Einspeisedruck des Druckreduzierabschnitts und einer niedrigeren Temperatur als der Einspeisetemperatur des Druckreduzierabschnitts erzeugt werden, wobei der Druckreduzierabschnitt ein oder mehrere Ventile und/oder eine oder mehrere Turbinenstufen umfassen kann.

In einer Ausführungsform der Erfindung können ein oder mehrere Ströme, die im Druckreduzierabschnitt eine niedrige Temperatur, vorzugsweise eine Temperatur unter 0 °C, erreichen, zur Kühlung eines beliebigen Stroms im Prozess verwendet werden, der gekühlt werden muss, am meisten bevorzugt ein oder mehrere Ströme in der Kohlendioxidabtrennung, die in allen Ausgestaltungen mit 50 bzw. 60 angegeben ist.

In Verbindung mit einem elektrisch beheizten Reformierreaktor kann zumindest ein Teil des von der Festoxid-Brennstoffzelleneinheit 10 erzeugten Stroms zumindest einen Teil des dort zur Beheizung verwendeten Stroms liefern. Der von der Festoxid-Brennstoffzelleneinheit 10 gelieferte Anteil des für die Beheizung des elektrisch beheizten Reformierreaktors verwendeten Stroms ist kann größer als 10%, insbesondere größer als 20%, sein.

Bei der Verwendung des vorgeschlagenen Systems mit einem elektrisch beheizten Reformierreaktor kann zumindest ein Teil der zum Vorheizen des Reformereinsatzes benötigten Wärme durch Strom bereitgestellt werden. Dies kann durch einen oder mehrere separate elektrische Heizer und/oder durch Erhitzen des Reformereinsatzes in einem ersten Abschnitt der Reformerrohre in Abwesenheit von Katalysator erfolgen, bevor er in einem zweiten Abschnitt der Reformerrohre mit einem geeigneten Katalysator in Kontakt gebracht wird. Ein Teil des an Kohlendioxid abgereicherten Gases aus der zweiten Druckwechseladsorption kann in eine Vorverarbeitungseinheit, einen Reformierungsreaktor oder einen der Wassergasshiftreaktoren zurückgeführt werden. Der in die Verbrennungskammer geleitete Strom kann alternativ exportiert oder energetisch genutzt werden, um Wärme und/oder Strom zu erzeugen.

## Patentansprüche

**1.** Verfahren (100, 200) zur Herstellung eines Wasserstoffprodukts (320), das im Wesentlichen Wasserstoff enthält, wobei das Verfahren umfasst, dass
- unter Verwendung einer Reformierung (31) und einer Wassergasshift (35) ein erstes Komponentengemisch (312) das Kohlendioxid und tiefer als Kohlendioxid siedende Komponenten, darunter Wasserstoff und Kohlenmonoxid, enthält, bereitgestellt wird,
- unter Verwendung einer ersten adsorptiven Trennung (36) das Wasserstoffprodukt und ein zweites Komponentengemisch (305, 608), das jede der tiefer als Kohlendioxid siedenden Komponenten jeweils in einem Anteil enthält, bereitgestellt werden,
- unter Verwendung einer Kohlendioxidabtrennung (50, 60), welche eine kryogene Trennung (54) und eine zweite adsorptive Trennung (55, 65) umfasst, ein Kohlendioxidprodukt (504), das im Wesentlichen Kohlendioxid enthält, und ein drittes Komponentengemisch (507, 607), das im Wesentlichen frei von Kohlendioxid ist und jede der tiefer als Kohlendioxid siedenden Komponenten jeweils in einem Anteil enthält, bereitgestellt werden, und
- das Verfahren (100) in einer ersten Alternative durchgeführt wird, in welcher das erste Komponentengemisch (312) oder ein Teil hiervon ohne vorherige Trennung in der Kohlendioxidabtrennung (50) der ersten adsorptiven Trennung (36) zugeführt wird, wobei das zweite Komponentengemisch (305) Kohlendioxid enthält, wobei das zweite Komponentengemisch (305) oder ein Teil hiervon der Kohlendioxidabtrennung (50) zugeführt wird, und wobei das dritte Komponentengemisch (507) oder ein Teil hiervon einer Festoxid-Brennstoffzelleneinheit (10) zugeführt wird, oder
- das Verfahren (200) in einer zweiten Alternative durchgeführt wird, in welcher das erste Komponentengemisch (312) oder ein Teil hiervon ohne vorherige Trennung in der ersten adsorptiven Trennung (36) der Kohlendioxidabtrennung (60) zugeführt wird, wobei das zweite Komponentengemisch (608) im Wesentlichen frei von Kohlendioxid ist, wobei das dritte Komponentengemisch (607) oder ein Teil hiervon der ersten adsorptiven Trennung (36) zugeführt wird, und wobei das zweite Komponentengemisch (608) oder ein Teil hiervon der Festoxid-Brennstoffzelleneinheit (10) zugeführt wird.

**2.** Verfahren (100, 200) nach Anspruch 1, bei dem die Reformierung (31) einen oder mehrere Reformierschritte umfasst, der oder die aus einer Dampfreformierung, einer elektrifizierten Dampfreformierung einer partiellen Oxidation und einer autothermen Reformierung ausgewählt ist oder sind.

**3.** Verfahren (100, 200) nach Anspruch 1 oder 2, das ferner umfasst, der Reformierung (31) einen Methan enthaltenden Reformierungseinsatz (301) zuzuführen, und den Reformierungseinsatz (301) unter Verwendung eines oder mehrere Aufbereitungsschritte zu bilden, die eine Entschwefelung und/oder eine Präreformierung (32) umfassen.

**4.** Verfahren (100, 200) nach einem der vorstehenden Ansprüche, bei dem das erste Komponentengemisch (312), das zweite Komponentengemisch (305, 608) und das dritte Komponentengemisch (507, 607) Methan als eine der tiefer als Kohlendioxid siedenden Komponenten enthält.

**5.** Verfahren (100, 200) nach einem der vorstehenden Ansprüche, bei dem das Kohlendioxidprodukt (504) unter Verwendung der kryogenen Trennung (54) bereitgestellt wird, wobei unter Verwendung der kryogenen Trennung (54) ein viertes Komponentengemisch (505) bereitgestellt wird, das Kohlendioxid und jede der tiefer als Kohlendioxid siedenden Komponenten jeweils in einem Anteil enthält, wobei das vierte Komponentengemisch (505) oder ein Teil hiervon der zweiten adsorptiven Trennung (55, 65) zugeführt wird, wobei unter Verwendung der zweiten adsorptiven Trennung (55, 65) ein fünftes Komponentengemisch bereitgestellt wird, das Kohlendioxid und jede der tiefer als Kohlendioxid siedenden Komponenten jeweils in einem Anteil enthält, und wobei das fünfte Komponentengemisch oder ein Teil hiervon dem kryogenen Trennschritt (54) zugeführt wird.

**6.** Verfahren (100) nach Anspruch 5, das in der ersten Verfahrensalternative durchgeführt wird, wobei das zweite Komponentengemisch (305) oder dessen der Kohlendioxidabtrennung (50) zugeführter Teil, oder ein Teil hiervon, der kryogenen Trennung (54) zugeführt wird, ohne zuvor in der zweiten adsorptiven Trennung (55) getrennt worden zu sein.

**7.** Verfahren (100) nach Anspruch 6, bei dem der Festoxid-Elektrolysezelleneinheit (10) ein Teil des dritten Komponentengemischs (507) zugeführt wird, der unter Verwendung einer Membrantrennung (71) gebildet wird.

**8.** Verfahren (200) nach Anspruch 5, das in der zweiten Verfahrensalternative durchgeführt wird, wobei das erste Komponentengemisch (312) oder dessen der Kohlendioxidabtrennung (60) zugeführter Teil, oder ein Teil hiervon, der zweiten adsorptiven Trennung (55) zugeführt wird, ohne zuvor in der kryogenen Trennung (54) getrennt worden zu sein.

**8.** Verfahren (100, 200) nach einem der vorstehenden Ansprüche, bei dem unter Verwendung der Festoxid-Brennstoffzelleneinheit (10) ein Abgas (108) gebildet wird, das Kohlendioxid und eine oder mehrere der tiefer als Kohlendioxid siedenden Komponenten in einem Anteil oder jeweils in einem Anteil enthält, wobei das Abgas (108) in die Kohlendioxidabtrennung (50, 60) zurückgeführt und/oder einer Wärmeerzeugungseinheit (34) verfeuert wird.

**9.** Verfahren (100, 200) nach einem der vorstehenden Ansprüche, bei dem stromauf der kryogenen Trennung (54) eine Verdichtung (52) und Trocknung (53) vorgenommen wird.

**10.** Anlage zur Herstellung eines Wasserstoffprodukts (320), das im Wesentlichen Wasserstoff enthält, wobei die Anlage dafür eingerichtet ist,
- unter Verwendung einer Reformierung (31) und einer Wassergasshift (35) ein erstes Komponentengemisch (312) das Kohlendioxid und tiefer als Kohlendioxid siedende Komponenten, darunter Wasserstoff und Kohlenmonoxid, enthält, bereitzustellen,
- unter Verwendung einer ersten adsorptiven Trennung (36) das Wasserstoffprodukt und ein zweites Komponentengemisch (305, 608), das jede der tiefer als Kohlendioxid siedenden Komponenten jeweils in einem Anteil enthält, bereitzustellen,
- unter Verwendung einer Kohlendioxidabtrennung (50, 60), welche eine kryogene Trennung (54) und eine zweite adsorptive Trennung (55, 65) umfasst, ein Kohlendioxidprodukt (504), das im Wesentlichen Kohlendioxid enthält, und ein drittes Komponentengemisch (507, 607), das im Wesentlichen frei von Kohlendioxid ist und jede der tiefer als Kohlendioxid siedenden Komponenten jeweils in einem Anteil enthält, bereitzustellen, und
- wobei die Anlage in einer ersten Ausgestaltung dafür eingerichtet ist, das erste Komponentengemisch (312) oder einen Teil hiervon ohne vorherige Trennung in der Kohlendioxidabtrennung (50) der ersten adsorptiven Trennung (36) zuzuführen, wobei das zweite Komponentengemisch (305) Kohlendioxid enthält, das zweite Komponentengemisch (305) oder einen Teil hiervon der Kohlendioxidabtrennung (50) zuzuführen, und das dritte Komponentengemisch (507) oder einen Teil hiervon einer Festoxid-Brennstoffzelleneinheit (10) zuzuführen, oder
- wobei die Anlage in einer zweiten Ausgestaltung eingerichtet ist, das erste Komponentengemisch (312) oder einen Teil hiervon ohne vorherige Trennung in der ersten adsorptiven Trennung (36) der Kohlendioxidabtrennung (60) zuzuführen, wobei das zweite Komponentengemisch (608) im Wesentlichen frei von Kohlendioxid ist, das dritte Komponentengemisch (607) oder einen Teil hiervon der ersten adsorptiven Trennung (36) zuzuführen, und das zweite Komponentengemisch (608) oder einen Teil hiervon der Festoxid-Brennstoffzelleneinheit (10) zuzuführen.

**11.** Anlage nach Anspruch 10, die zur Durchführung eines Verfahrens nach einem der Ansprüche 1 bis 9 eingerichtet ist.
